(19) Europäisches Patentamt / European Patent Office / Office européen des brevets

(11) **EP 2 212 574 B1**

(12) **FASCICULE DE BREVET EUROPEEN**

(45) Date de publication et mention de la délivrance du brevet:
**30.03.2011 Bulletin 2011/13**

(21) Numéro de dépôt: **08855215.3**

(22) Date de dépôt: **25.11.2008**

(51) Int Cl.:
*F16C 33/78* *(2006.01)*    *F16J 15/34* *(2006.01)*

(86) Numéro de dépôt international:
**PCT/EP2008/066160**

(87) Numéro de publication internationale:
**WO 2009/068532 (04.06.2009 Gazette 2009/23)**

(54) **DISPOSITIF DE GUIDAGE EN ROTATION ETANCHE AU FLUIDE**

FLÜSSIGKEITSDICHTE DREHFÜHRUNGSVORRICHTUNG

FLUID-TIGHT ROTATION-GUIDING DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.11.2007 FR 0708290**

(43) Date de publication de la demande:
**04.08.2010 Bulletin 2010/31**

(73) Titulaire: **THALES**
**92200 Neuilly-sur-Seine (FR)**

(72) Inventeurs:
• **BRETEZ, Arnaud**
**F-92350 Le Plessis Robinson (FR)**
• **COLLARD, Eric**
**F-75013 Paris (FR)**
• **ROUSSET, Michel**
**F-78280 Guyancourt (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
FR-A- 916 295       FR-A- 2 398 237
GB-A- 642 585       US-A- 2 516 191
US-A- 3 301 568     US-A1- 2005 158 166

# Description

Le domaine de l'invention est celui des dispositifs de guidage en rotation, destinés à être montés entre les parties fixe et mobile d'un équipement soumis à de fortes variations thermiques et de pression. La partie mobile est guidée en rotation sur la partie fixe. L'invention concerne plus particulièrement les dispositifs de guidage en rotation qui permettent d'assurer l'étanchéité de l'équipement vis-à-vis de particules solides et/ou de fluides venant de l'extérieur.

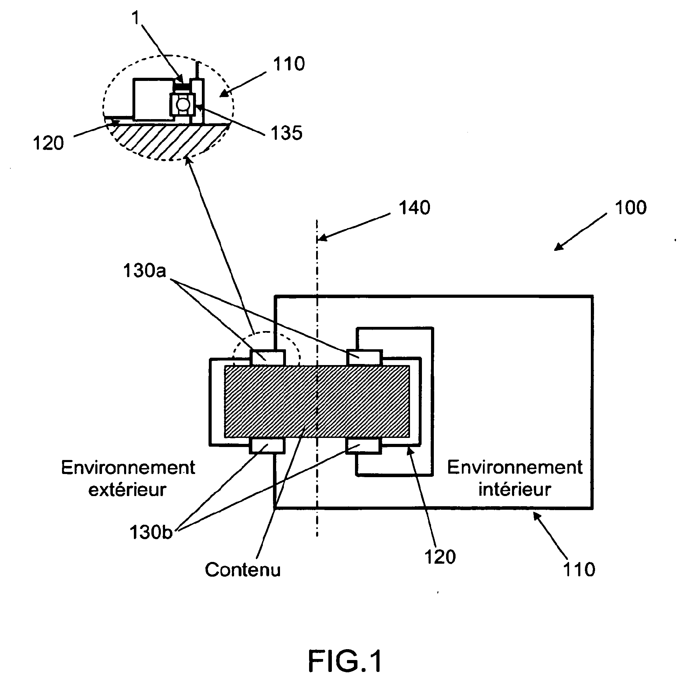

Cet équipement est par exemple une nacelle 100 aéroportée schématiquement représentée en coupe figure 1. Cette nacelle comporte un élément fixe 110 et un élément mobile 120 tournant autour d'un axe de rotation 140. La figure montre aussi 2 dispositifs de guidage en rotation 130a, 130b en couronne, étanches aux fluides et qui assurent le guidage en rotation de l'élément mobile 120 de la nacelle autour de l'axe de rotation 140. Une partie d'un de ces dispositifs de guidage en rotation est montré en zoom.

Il existe actuellement différents types de dispositifs de guidage en rotation.

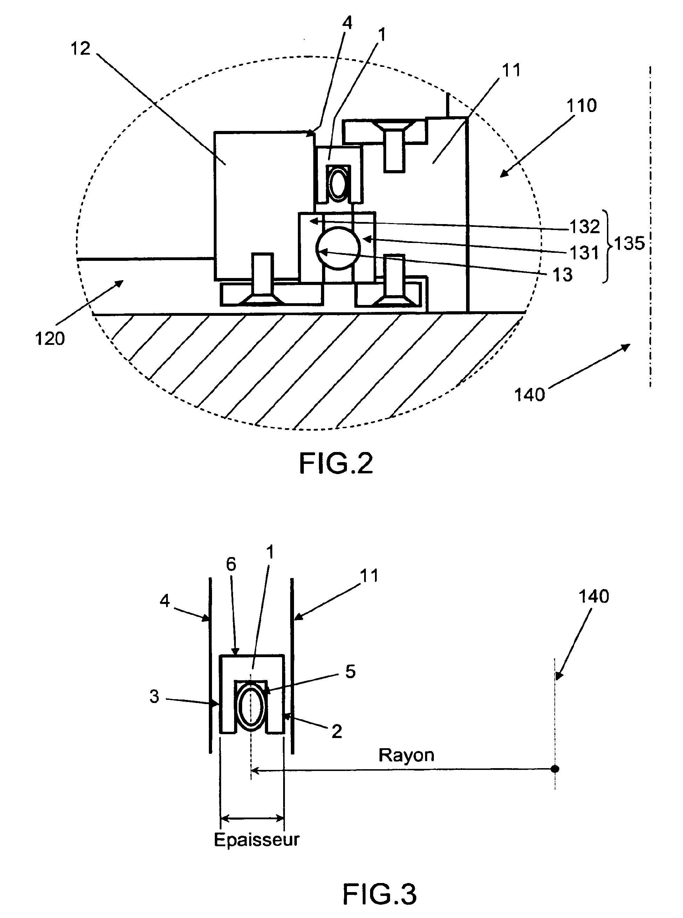

A titre indicatif, on peut citer des dispositifs de guidage en rotation à joint dynamique, dont un exemple est montré figure 2. Ces dispositifs comportent :

- une structure porteuse comportant un support fixe 11 solidaire de l'élément fixe 110 de l'équipement et un support mobile 12 solidaire de l'élément mobile 120 de l'équipement et apte à tourner autour du support fixe selon un axe de rotation 140.
- une interface entre les supports fixe 11 et mobile 12 qui comporte un joint dynamique souple 1 solidaire du support fixe 11 (ou du support mobile 12), qui assure l'étanchéité dynamique entre ces supports fixe et mobile. Un exemple de joint dynamique étanche est montré figure 3. Il comprend notamment :

  - une face d'appui 2 destinée à s'appuyer sur le support fixe 11,
  - une face de frottement 3 parallèle à la face d'appui, destinée au contact dynamique avec une piste de frottement 4 reliée au support mobile, cette face de frottement étant généralement moins large que la face d'appui,
  - et un ressort métallique 5 placé entre la face d'appui 2, la face de frottement 3 et une face intermédiaire 6 joignant la face d'appui et la face de frottement, et qui vise à écarter ces deux faces pour assurer la mise en contact de la face de frottement 3 sur la piste de frottement 4 selon une force de contact perpendiculaire à la face de frottement. Cette force de contact peut également être obtenue sans ressort, par déformation du joint dynamique.

On se reporte à la figure 2. L'interface comprend également un palier tournant 135 qui assure le guidage en rotation du support fixe 11 autour du support mobile 12 et qui comporte une rangée de billes 13 logées entre deux pistes de roulement formées dans une bague intérieure 131 et une bague extérieure 132 respectivement fixées aux supports fixe 11 et mobile 12 du dispositif de guidage en rotation.

Un autre exemple de dispositif de guidage en rotation à joint dynamique souple et ressort métallique est décrit dans le document FR 2 398 237.

Dans le cadre par exemple de la conception d'une nacelle aéroportée, il s'avère nécessaire de réaliser des équipements d'encombrement et de masse réduits, capables de supporter des environnements vibratoires sévères, des chocs et des variations de pression et de température sans dégradation ni modification des performances. Dans le cas d'une nacelle aéroportée, les variations de pression entre l'intérieur et l'extérieur de la nacelle peuvent atteindre 1 bar et les variations de température sont comprises entre -55°C et 80°C. Les joints actuels classiquement réalisés en élastomère présentent un coefficient de dilatation tel que soumis à une baisse de température, ils se rétractent entraînant une diminution voire une complète absence d'étanchéité du joint. Soumis à une hausse de température, ils se dilatent, augmentant la force de frottement de façon inacceptable. Les performances des dispositifs actuels de guidage en rotation à joint dynamique sont insuffisantes dans les conditions de variations de pression et de température évoquées : leur emploi est limité à des températures supérieures à - 20°C.

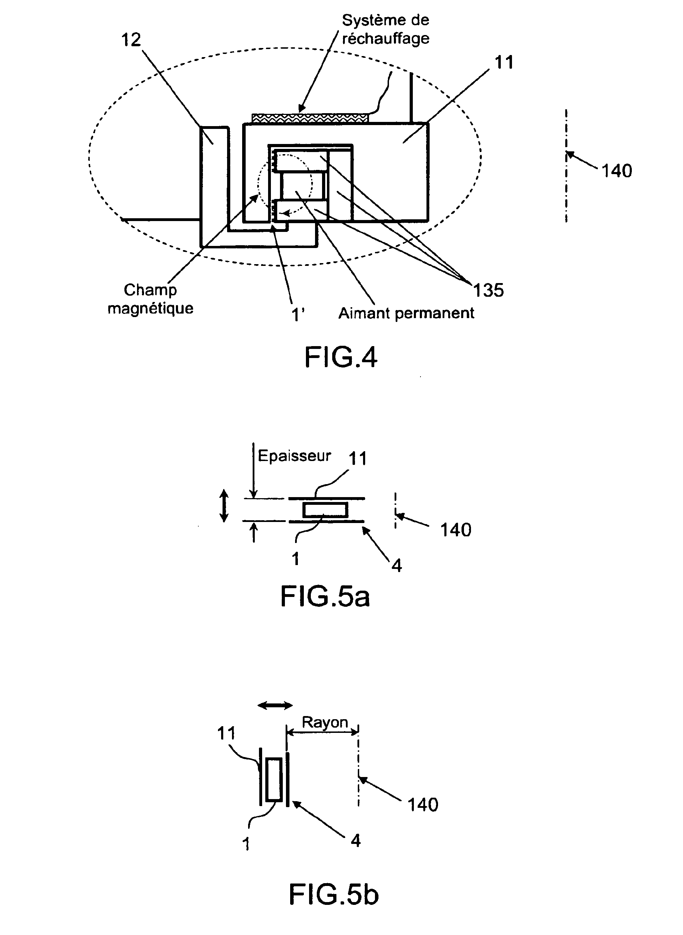

Certains dispositifs de guidage en rotation utilisés aujourd'hui pour assurer de meilleures performances utilisent une technologie basée sur les ferrofluides pour assurer l'étanchéité dynamique entre les parties fixe et mobile du dispositif. Mais cette technologie est coûteuse et présente des couples de frottement visqueux élevés à basse température. Cet inconvénient peut être compensé par un système de réchauffage du ferrofluide au détriment du coût, de l'encombrement et de la complexité du dispositif. Un exemple de dispositif de guidage en rotation à ferrofluide est représenté figure 4. Il comprend un support mobile 12, un support fixe 11, un palier 135, un élément d'étanchéité 1' formé par un film d'huile maintenu en place par un champ magnétique agissant sur des particules conductrices contenues dans le film d'huile.

Le but de l'invention est d'obtenir un dispositif de guidage en rotation qui présente de bonnes performances sans présenter les inconvénients sus-mentionnés.

Plus précisément l'invention a pour objet un dispositif de guidage en rotation qui comprend un support fixe et un support mobile apte à tourner autour du support fixe selon un axe de rotation, et une interface entre les supports fixe et mobile, qui comporte :

- un palier apte à assurer le guidage en rotation du support mobile autour du support fixe,

- un joint dynamique souple apte à assurer l'étanchéité entre le support fixe et le support mobile, monté entre une piste de frottement solidaire d'un desdits support et une structure mécanique solidaire de l'autre support, qui comporte un ressort métallique destiné à assurer la force de contact du joint entre la piste de frottement et la structure mécanique

Il est principalement caractérisé en ce que le joint dynamique est monté parallèlement à l'axe de rotation c'est-à-dire de manière à ce que la force de contact s'exerce parallèlement à l'axe de rotation.

Le support fixe comprend avantageusement des entretoises et le joint comprend des oblongs répartis le long du joint et destinés à accueillir les entretoises, pour assurer un guidage en étoile du joint.

De préférence, le palier comprend deux rangées de billes, et les bagues intérieure et extérieure du palier sont respectivement intégrées aux supports fixe et mobile.

Selon une caractéristique de l'invention, il comprend une piste de frottement en contact avec le joint dynamique, revêtue d'un traitement de surface de type carbone sous forme de diamant amorphe.

L'invention a aussi pour objet un équipement qui comprend un élément fixe, un élément mobile et un dispositif de guidage en rotation tel que décrit et dont le support fixe est fixé à l'élément fixe de l'équipement, et le support mobile est fixé à l'élément mobile de l'équipement.

Cet équipement est par exemple une nacelle destinée à être aéroportée.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement une nacelle aéroportée équipée d'un dispositif de guidage en rotation,
la figure 2 déjà décrite représente schématiquement un dispositif de guidage en rotation selon l'art antérieur,
la figure 3 déjà décrite représente schématiquement un exemples de joint dynamique souple à ressort métallique,
la figure 4 déjà décrite représente schématiquement un autre dispositif de guidage en rotation selon l'art antérieur,
les figures 5a et 5b illustrent schématiquement la dilatation d'un joint dynamique souple dans les cas d'un montage axial et radial,
la figure 6a représente schématiquement une vue de dessus d'un joint dynamique monté dans un dispositif de guidage selon l'invention, la figure 6b étant un zoom d'une partie de la figure 6a,
la figure 7 représente schématiquement un exemple de dispositif de guidage en rotation selon l'invention.

D'une figure à l'autre, les mêmes éléments sont repérés par les mêmes références.

Le dispositif de guidage selon l'invention est remarquable en ce que le joint dynamique 1 est monté axialement dans le dispositif de guidage, c'est-à-dire de manière à ce que la force de contact du joint (représentée par une double flèche en gras) s'exerce parallèlement à l'axe de rotation 140 comme illustré figure 5a. Dans le cas d'un montage radial, le joint 1 est disposé de manière à ce que la force de contact du joint (représentée par une double flèche en gras) s'exerce perpendiculairement à l'axe de rotation 140 comme illustré figures 3 et 5b. Le montage axial du joint 1 permet de s'affranchir des problèmes de dilatation de celui-ci.

En effet, dans le cas d'un montage axial illustré figure 5a, la dilatation est proportionnelle à :

$$\Delta T \times \text{épaisseur du joint} \times \lambda_{joint},$$

$\Delta T$ étant la variation thermique, $\lambda$joint étant le coefficient de dilatation du joint exprimé en m/°C. Dans ce cas, la dilatation du joint est libre dans la direction radiale : l'impact de la dilatation du joint sur sa précharge est donc faible.

Dans le cas d'un montage radial illustré figure 5b, la dilatation est proportionnelle à :

$$\Delta T \times \text{rayon du joint} \times \lambda_{joint}.$$

Dans ce cas, la dilatation du joint est contrainte dans la direction radiale : l'impact de la dilatation du joint sur sa précharge est donc important.

Sachant que l'épaisseur du joint est très inférieure au rayon du joint, la dilatation du joint dans la direction de la force de contact est considérablement réduite dans le cas du montage axial par rapport à celui d'un montage radial. Dans le cas d'une nacelle aéroportée on a typiquement les dimensions suivantes :

rayon du joint = 75 mm
épaisseur du joint = 7 mm.

Le montage axial réduit ainsi considérablement les effets thermiques sur le joint.

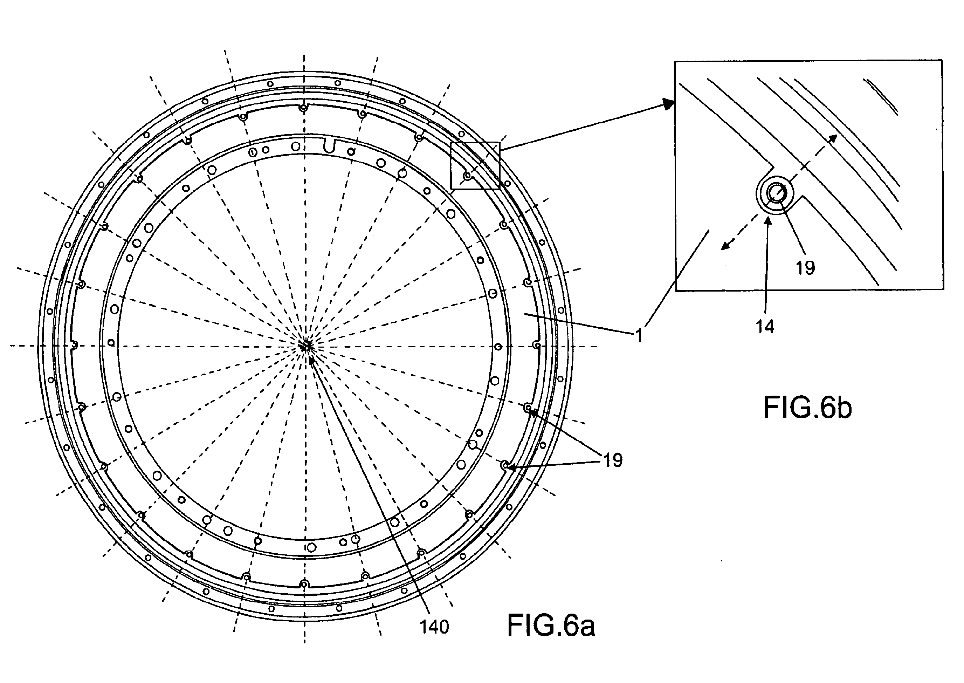

Les variations de température peuvent aussi avoir pour effet de décentrer le joint. Aussi est-il prévu un guidage en étoile du joint dans le dispositif selon l'invention, ce guidage assurant le centrage du joint 1 quelle que soit la température. La figure 6a montre une vue de dessus d'un joint dynamique 1 placé dans un dispositif de guidage en rotation : il s'agit d'une vue selon l'axe de rotation 140 en figure 1 du dispositif de guidage décrit. Le guidage en étoile représenté par des traits d'axe, est obtenu au moyen d'entretoises 19 régulièrement réparties sur le support fixe 11 du dispositif de guidage, en contact avec la face d'appui du joint 1 ; ces entretoises 19 viennent s'engager dans des oblongs 14 prévus à cet effet dans la face d'appui du joint 1. Les oblongs 14 sont de préférence disposés sur la périphérie extérieure du joint 1 comme indiqué sur la figure 6b. Selon un autre mode de réalisation ils forment des trous ou des creux à l'intérieur du joint. Les entretoises sont avantageusement identiques ainsi que les oblongs. Il y a par exemple 24 entretoises et autant d'oblongs pour un joint d'environ 75 mm de rayon. Les entretoises ont par exemple 5 mm de diamètre.

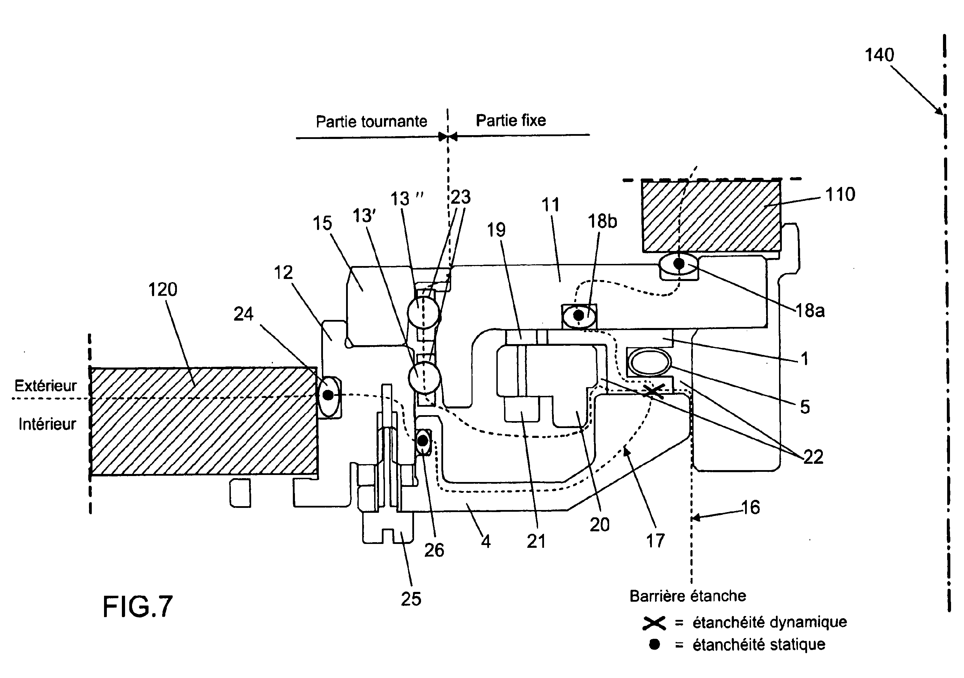

La qualité de fonctionnement du dispositif de guidage repose régalement sur la qualité de réalisation de la mécanique. Un usage répété dans les conditions indiquées entraîne un voile du palier 135, une réduction de sa raideur et un manque de précision du guidage en rotation. Un autre élément remarquable du dispositif selon l'invention qui permet de réduire ce problème consiste à intégrer les bagues du palier au dispositif de guidage comme illustré figure 7. La bague intérieure du palier est intégrée au support fixe 11 du dispositif de guidage. La bague extérieure comprend généralement deux parties permettant d'ajuster le palier au montage ; l'une de ces parties est intégrée au support mobile 12. Selon une variante de réalisation, la bague extérieure est en une seule partie intégrée au support mobile et la bague intérieure est en deux parties dont l'une est intégrée au support fixe. Cette intégration réduit le nombre de pièces et donc d'interfaces susceptibles d'introduire un voile du palier au fur et à mesure de son fonctionnement. En outre le palier comprend 2 rangées de billes 13', 13" de même diamètre, qui permettent d'obtenir une faible variation du couple de frottement du palier et d'améliorer ainsi la précision du guidage en rotation ; deux pistes de roulement intérieures sont alors formées dans le support fixe 11 et une piste de roulement extérieure est formée dans le support mobile 12, la deuxième piste de roulement extérieure étant formée dans la partie 15 de la bague extérieure non intégrée au support mobile 12. Selon la variante envisagée plus haut, deux pistes de roulement extérieures sont alors formées dans le support mobile et une piste de roulement intérieure est formée dans le support fixe, la deuxième piste de roulement intérieure étant formée dans la partie de la bague intérieure non intégrée au support fixe. Cette intégration permet aussi de fournir au joint un appui stable malgré un usage répété et d'optimiser la qualité de la surface de frottement avec le joint dynamique.

Enfin, la piste de frottement 4 reliée au support mobile 12 et qui est en contact avec le joint 1 est avantageusement revêtue d'un traitement de surface qui améliore la qualité de la surface de frottement notamment en retardant son usure. On utilise par exemple un traitement de surface de type carbone sous forme de diamant amorphe aussi désigné « DLC » acronyme de l'expression anglo-saxonne « Diamond Like Carbon ».

On décrit en rotation avec la figure 7 un exemple de dispositif de guidage en rotation selon l'invention, installé entre les éléments fixe 110 et mobile 120 d'un équipement. Sont indiquées sur la figure, 2 lignes de séparation. L'une 16 représente la séparation entre les parties fixe et mobile du dispositif de guidage ; l'autre 17 représente la barrière d'étanchéité sur le trajet de laquelle se trouvent le joint dynamique 1 qui assure l'étanchéité dynamique et des joints statiques 18a, 18b, 26, 24 qui assurent une étanchéité statique entre des éléments mécaniques solidaires les uns des autres.

La partie fixe du dispositif de guidage comprend :

- Un support fixe 11 fixé à l'élément fixe 110 de l'équipement, et relié au joint dynamique 1. Ce support fixe 11 est usiné de façon à former les deux pistes de roulement intérieures du palier. Ces pistes sont typiquement éloignées l'une de l'autre d'environ 6 mm. Les billes 13', 13" logées dans ces pistes ont par exemple 4 mm de diamètre. Deux joints statiques sont logés dans le support fixe 11, l'un 18a étant en contact avec l'élément fixe 110 de l'équipement, l'autre 18b avec la face d'appui du joint dynamique 1. Les entretoises 19 qui viennent s'engager dans les oblongs de la face d'appui du joint sont disposées sur ce support fixe 11.

- Le joint dynamique 1 qui assure une étanchéité au niveau de sa face de frottement. Le joint dynamique 1 est fixé au support fixe 11 par une bride 20 de fixation du joint qui est partiellement appliquée sur la partie libre de la face d'appui, c'est-à-dire celle qui n'est pas en contact avec le ressort 5. Cette bride 20 est fixée au moyen d'une vis 21 qui s'engage jusqu'au support fixe 11 à travers un oblong et une entretoise 19. En prévision de la dilatation du joint, un jeu 22 est ménagé entre le joint (en dehors des faces d'appui et de frottement) et les pièces mécaniques.

La partie mobile du palier comprend :

- Un support mobile 12 fixé à l'élément mobile 120 de l'équipement. Ce support mobile 12 est usiné de façon à former une des deux pistes de roulement extérieures du palier pour loger une première rangée de billes 13'. Des séparateurs 23 de billes sont de préférence installés dans les pistes de roulement. Un joint statique 24 en contact avec l'élément mobile 120 de l'équipement est logé dans ce support mobile 12.

- L'autre partie 15 de la bague extérieure usinée de façon à former l'autre piste de roulement extérieure du palier et ajustée au support mobile 12 pour loger la deuxième rangée de billes 13".

- Une piste de frottement 4 est fixée à ce support mobile 12 au moyen par exemple d'une vis 25. Un joint statique 26 en contact avec le support mobile 12 est logé dans cette piste de frottement 4 ; cette piste de frottement 4 est par ailleurs en contact avec la face de frottement du joint dynamique 1.

## Revendications

1. Dispositif de guidage en rotation qui comprend un support fixe (11) et un support mobile (12) apte à tourner autour du support fixe (11) selon un axe de rotation (140), et une interface entre les supports fixe (11) et mobile (12), qui comporte :

   - un palier apte à assurer le guidage en rotation du support mobile (12) autour du support fixe (11),
   - un joint dynamique souple (1) apte à assurer l'étanchéité entre le support fixe (11) et le support mobile (12), monté entre une piste de frottement (4) solidaire d'un desdits support (12 ou 11) et une structure mécanique solidaire de l'autre support (11 ou 12), et qui comporte un ressort métallique (5) destiné à assurer la force de contact du joint entre la piste de frottement et la structure mécanique,

   **caractérisé en ce que** le joint dynamique (1) est monté parallèlement à l'axe de rotation (140) c'est-à-dire de manière à ce que la force de contact s'exerce parallèlement à l'axe de rotation (140) et **en ce que** le support fixe (11) comprend des entretoises (19) et le joint (1) comprend des oblongs (14) répartis le long du joint et destinés à accueillir les entretoises, pour assurer un guidage en étoile du joint.

2. Dispositif de guidage en rotation selon la revendication précédente, **caractérisé en ce que** le palier comprend une bague intérieure solidaire du support fixe (11) et une bague extérieure solidaire du support mobile (12), et des billes logées entre ces bagues.

3. Dispositif de guidage en rotation selon la revendication précédente, **caractérisé en ce que** le palier comprend deux rangées de billes (13', 13"), et **en ce que** les bagues intérieure et extérieure du palier sont respectivement intégrées aux supports fixe (11) et mobile (12).

4. Dispositif de guidage en rotation selon l'une des revendications précédentes, **caractérisé en ce que** la piste de frottement (4) en contact avec le joint dynamique (1) est revêtue d'un traitement de surface de type carbone sous forme de diamant amorphe.

5. Equipement qui comprend un élément fixe (110), un élément mobile (120) et un dispositif de guidage en rotation selon l'une des revendications précédentes et dont le support fixe (11) est fixé à l'élément fixe (110) de l'équipement, et le support mobile (12) est fixé à l'élément mobile (120) de l'équipement.

6. Equipement selon la revendication précédente, **caractérisé en ce que** cet équipement est une nacelle (100) destinée à être aéroportée.

## Claims

1. A rotation-guiding device which comprises a fixed support (11) and a movable support (12) designed to rotate about the fixed support (11) about an axis of rotation (140), and an interface between the fixed (11) and movable (12) supports, which comprises:

   - a bearing capable of guiding the movable support (12) in its rotation about the fixed support (11),
   - a dynamic flexible seal (1) capable of providing a seal between the fixed support (11) and the movable support (12) mounted between a friction track (4) secured to one of said supports (12 or 11) and a mechanical structure secured to the other support (11 or 12), and which includes a metal spring (5) designed to provide the contact force for the seal between the friction track and the mechanical structure,

   **characterised in that** the dynamic seal (1) is mounted parallel to the axis of rotation (140) that is to say, such that the contact force is exerted parallel to the axis of rotation (140), and **in that** the fixed support (11) comprises spacers (19) and the seal (1) comprises oblongs (14) which are distributed along the length of the seal and which are intended to accommodate these spacers, in order to provide star shaped guiding of the seal.

2. The rotation-guiding device according to the previous claim, **characterised in that** the bearing includes an internal ring secured to the fixed support (11) and an external ring secured to the movable support (12) and balls seated between these rings.

3. The rotation-guiding device according to the previous claim, **characterised in that** the bearing includes two rows of balls (13', 13") and **in that** the internal and external rings of the bearing are respectively integrated with the fixed (11) and movable (12) supports.

4. The rotation-guiding device according to any one of the previous claims, **characterised in that** the friction track (4) in contact with the dynamic seal (1) is coated with a carbon type surface finish in the form of amorphous diamond.

**5.** An equipment item which comprises a fixed element (110), a movable element (120) and a rotation-guiding device according to any one of the previous claims and of which the fixed support (11) is fixed to the fixed element (110) of the equipment item and the movable support (12) is fixed to the movable element (120) of the equipment item.

**6.** The equipment item according to the previous claim, **characterised in that** this equipment item is a nacelle (100) which is intended to be airborne.

**Patentansprüche**

**1.** Drehführungsvorrichtung mit einem festen Träger (11) und einem beweglichen Träger (12), der über eine Rotationsachse (140) um den festen Träger (11) rotieren kann, und einer Schnittstelle zwischen dem festen (11) und dem beweglichen (12) Träger, die Folgendes umfasst:

- ein Lager, das den beweglichen Träger (12) bei der Rotation um den festen Träger (11) führen kann,
- eine dynamische flexible Dichtung (1) zum Abdichten zwischen dem festen Träger (11) und dem beweglichen Träger (12), die zwischen einer mit einem der Träger (12 oder 11) verbundenen Friktionsbahn (4) und einer mit dem anderen Träger (11 oder 12) verbundenen mechanischen Struktur montiert ist und eine Metallfeder (5) zum Verstärken der Kontaktkraft der Dichtung zwischen der Friktionsbahn und der mechanischen Struktur aufweist,

**dadurch gekennzeichnet, dass** die dynamische Dichtung (1) parallel zur Rotationsachse (140) montiert ist, das heißt so, dass die Kontaktkraft parallel zur Rotationsachse (140) ausgeübt wird, und **dadurch**, dass der feste Träger (11) Abstandshalter (19) umfasst und die Dichtung (1) Rechtecke (14) umfasst, die entlang der Dichtung verteilt und dazu bestimmt sind, die Abstandshalter aufzunehmen, um eine sternförmige Führung der Dichtung bereitzustellen.

**2.** Drehführungsvorrichtung nach dem vorherigen Anspruch, **dadurch gekennzeichnet, dass** das Lager einen mit dem festen Träger (11) verbundenen Innenring und einen mit dem beweglichen Träger verbundenen Außenring und zwischen diesen Ringen sitzende Kugeln umfasst.

**3.** Drehführungsvorrichtung nach dem vorherigen Anspruch, **dadurch gekennzeichnet, dass** das Lager zwei Reihen Kugeln (13', 13") umfasst, und **dadurch**, dass der Innen- und der Außenring des Lagers jeweils in den festen (11) und den beweglichen (12) Träger integriert sind.

**4.** Drehführungsvorrichtung nach einem der vorherigen Ansprüche, **dadurch gekennzeichnet, dass** die Friktionsbahn (4) in Kontakt mit der dynamischen Dichtung (1) mit einem Oberflächenüberzug des Kohlenstofftyps in Form von amorphem Diamant beschichtet ist.

**5.** Ausrüstungsgegenstand, der ein festes Element (110), ein bewegliches Element (120) und eine Drehführungsvorrichtung nach einem der vorherigen Ansprüche umfasst und bei dem der feste Träger (11) an dem festen Element (110) des Ausrüstungsgegenstands befestigt ist und der bewegliche Träger (12) an dem beweglichen Element (120) des Ausrüstungsgegenstands befestigt ist.

**6.** Ausrüstungsgegenstand nach dem vorherigen Anspruch, **dadurch gekennzeichnet, dass** diese Ausrüstung eine Gondel (100) ist, die dazu bestimmt ist, durch die Luft getragen zu werden.

**FIG.1**

FIG.2

FIG.3

Système de
réchauffage

12

11

Champ
magnétique

140

135

1'

Aimant permanent

**FIG.4**

Epaisseur  11

1  4

140

**FIG.5a**

Rayon

11

140

1  4

**FIG.5b**

FIG.6b

FIG.6a

EP 2 212 574 B1

FIG.7

Partie tournante | Partie fixe

Extérieur
Intérieur

Barrière étanche

✕ = étanchéité dynamique
● = étanchéité statique

EP 2 212 574 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   FR 2398237